(19) Europäisches Patentamt
European Patent Office
Office européen des brevets

(11) EP 0 579 570 B1

## (12) EUROPEAN PATENT SPECIFICATION

(45) Date of publication and mention
of the grant of the patent:
**08.05.1996 Bulletin 1996/19**

(51) Int Cl.6: **G07D 5/08**, G07F 3/02

(21) Application number: **93500096.8**

(22) Date of filing: **01.07.1993**

(54) **Procedure for the detection and analysis of elements of a metallic nature**

Verfahren zur Erfassung und zur Analyse von Elementen metallischer Natur

Procédure pour la détection et l'analyse d'éléments de nature métallique

(84) Designated Contracting States:
**AT BE CH DE DK FR GB GR IE IT LI LU MC NL PT SE**

(30) Priority: **09.07.1992 ES 9201417**

(43) Date of publication of application:
**19.01.1994 Bulletin 1994/03**

(73) Proprietor: **TASELBURG, S.L.**
**E-09007 Burgos (ES)**

(72) Inventor: **Arnaiz Lopez, Felix Raul**
**E-09005 Burgos (ES)**

(74) Representative: **Cobas Barrios, Luis**
**c/o Tecnieurop, S.L.**
**Salustiano Olozaga, 6**
**E-28001 Madrid (ES)**

(56) References cited:
**EP-A- 0 122 732**           **EP-A- 0 331 530**
**GB-A- 2 029 995**           **GB-A- 2 096 812**

# Description

This invention concerns a procedure for the detection and analysis of elements of a metallic nature, such as coins, magnetic keys, tokens, alloys, etc.

The procedure of the invention is essentially applicable to coin selector apparatus intended to be fitted in, for example, automatic machines that are operated by the introduction of one or more coins, to a preset value.

There exist various types of coin selector on the market, and almost all of them have in common the fact that they use an emitter element and another receiver element that function electrically. The emitter and receiver elements usually consist of coils whose connections are made via conducting wires. Breakage of these wires is one of the most frequent causes of failure in the selectors.

Another problem with selectors of the type commented upon derives from their low reliability, it being necessary to resort to the addition of optical systems in order to measure the size of the coins. These optical systems also function electrically and, furthermore, have the drawback that they become dirty fairly quickly, thus increasing the level of failures and functioning problems.

As selectors whose functioning is based on the use of coils, one can quote the British patents 1461404 and 2151062, and the Spanish utility models numbers 272.205, 275.542 and 283.742. Within selectors based on optical systems; one can quote the Spanish patent 557.523 and, as a mixed selector including coils and optical means for measurement, one can quote for example the Spanish patent 555.181. All these selectors have the problems stated above, the lack of precision of the systems used being particularly notable.

GB-A-2 029 995 discloses a procedure for testing metal objects in which a decaying oscillating magnetic field is created and the number of oscillations above a pre-determined amplitude is counted to determine the object's identity.

The subject of the present invention is a procedure for the detection and analysis of elements of a metallic nature which, on account of its precision, is particularly applicable to the analysis of coins, tokens or counters, as well as any other element that can be introduced into a selector.

As well as its high precision, the procedure of the invention also has the advantage of simplicity of the components or circuits by which the detection and analysis is carried out, no more than one tank circuit being necessary for its functioning.

The procedure of the invention is especially appropriate as a personal identification system and for the identification of magnetic keys, on account of its simplicity, economy and reliability.

The procedure of the invention can also be applied to quality control in the manufacture of metallic materials.

As advantages of the invention the following can be pointed out: the use of a single coil for detecting metallic elements; in spite of its simplicity, it has high precision, which allows it to be used in coin detection and can even distinguish the year of its manufacture and the position in which it was introduced; it is not necessary to use two coils, one to generate a magnetic field that attracts the element and the other to detect it; given its precision, the use of optical elements is not necessary, thereby avoiding fitting and maintenance costs; by using only one coil, breakage of wires in the doors, as happens in traditional selectors, does not occur.

The invention's detection and analysis procedure is based on the study of specific characteristics of the self-oscillation response of a tank circuit.

In accordance with the invention, a magnetic field with damped oscillation is created and its damping is measured in order to obtain a value $K_0$, which corresponds to the average among the peaks of the oscillations. The metallic element to be analysed is made to pass through the field created, and a second measurement is made of the damping of that field in order to obtain a value $K_1$, which corresponds to the average of the ratio between the peaks of the oscillations altered by the effect of the passage of the metallic piece or element. The ratio $K_0/K_1$ is then calculated, which gives a unique and indicative value for the material of the metallic piece or element, a value that will be compared with preestablished values generated by a processor.

It is also provided for the invention to discover the value of the average of the periods of the damped oscillations before and during the passage of the metallic piece to be analysed, which allows values $P_0$ and $P_1$ to be obtained, whose ratio $P_0/P_1$ will give us a second unique and indicative value for the material of the metallic element which, as in the previous case, will be compared with preestablished values generated by a processor.

The damped oscillation magnetic field can be generated by means of a tank circuit. The signals from this circuit can be made to pass through a first amplifier or separator in order to detect the length of the period of the self-oscillation, and through a second amplifier or separator, through which passes the signal to an analog-digital converter.

The analog-digital converter could consist of a voltage/frequency converter or a voltage/pulse converter.

The characteristics and advantages of the invention will be able to be better understood with the following description, made with the help of the attached diagrams, in which is shown in a schematic manner, and by way of an example only rather than restrictively, a possible way of materializing the invention.

Figure 1 corresponds to the diagram of the simplest circuit that can be used for creating the damped self-oscillation field.

Figure 2 corresponds to the graph of the damped self-oscillation of the circuit of figure 1.

Figure 3 shows the circuit of figure 1 connected to a processor.

Figure 4 is a block circuit for a better way of materializing the procedure of the invention.

Figure 5 corresponds to the development of the circuit in figure 4.

Figure 6 represents the different shapes of wave produced with the circuitry of figure 4.

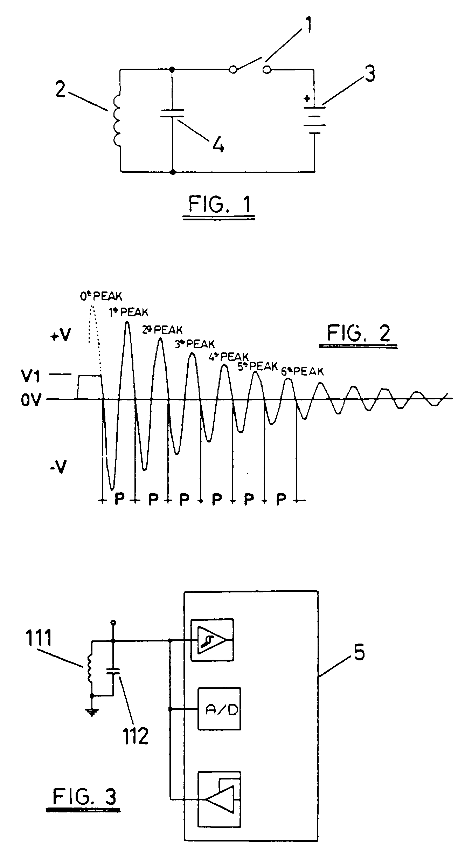

In the circuit in figure 1, when the switch 1 is closed a current flows through the coil 2 with an intensity that will be equal to V/R, where R is the resistance of the coil 2 and V the voltage of the supply battery 3. When the switch 1 is opened, the current flowing through the coil 2 decreases, creating between its terminals an induced back electromotive force, which charges the capacitor 4 with a voltage equivalent to the induced back electromotive force and inverse to the initial voltage. When the intensity of the current flowing through this circuit is zero, due to the phase difference between the current and voltage in this type of circuit, the voltage in the capacitor 4 is maximum but negative. In this moment, the capacitor 4 starts to discharge through the coil 2. This discharge produces a magnetic field in the coil 2. When the intensity in this coil is maximum, the voltage between its terminals is zero and the magnetic field starts to decrease, producing an induced back electromotive force between its terminals, which charges the capacitor 4 with a voltage equivalent to this induced back electromotive force, and inverse to the previous voltage. In theory, this cycle would become a perfect oscillation of indefinite duration. However, in practice this is not so due to the resistance of the circuit, magnetic resistance, losses in the capacitor and other losses that cause the oscillation to be damped, as shown in the graph of figure 2.

Another effect can also be seen in figure 2: the initial voltage V is less than the voltage at the peak of the first cycle. The reason is very simple: if, instead of putting a battery between the circuit terminals, we had just charged the capacitor 4, the voltage charge of this capacitor would be greater than the voltage at the first crest. However, by directly connecting the battery to the circuit, the initial charge is the intensity of the coil 2, because it has more force than the voltage in the capacitor 4. This system has been used because it is the way in which the oscillation is generated in this example.

The frequency of these cycles is always the same and is determined by the following formula:

$$f = \frac{1}{2}\sqrt{(1/LC - R^2/4L^2)}$$

Where:

f = Frequency in cycles/second in hertz
R = Resistance of the circuit in ohms
L = Impedance of the coil in henrys
C = Capacitance of the capacitor in farads

If the resistance of the circuit is not taken into account, or is zero, which is not possible, the formula is more familiar and is:

$$f = \frac{1}{2\sqrt{LC}}$$

and the period of the cycle that we see in the graph is:

$$P = \frac{1}{f}$$

P = Time of duration of each cycle in seconds.

With the description, it can quickly be deduced that the first parameter that is measured is the length of the cycle "P", which gives us the value of the inductance of the coil 2 in a quadratic function. And the relative permeability of the circuit will be given by $P_0/P_1$, where 120 is the value of the period in vacuo and 121 the value of the period when a material is inserted in the magnetic field.

The second value that interacts with the first for the analysis of materials is the ratio between the positive or negative peaks of the oscillation. The first peak that is produced always depends on the material interacting in the middle, including air itself; the second peak is the result of multiplying the first peak by a factor K that is always less than 1; the third peak is the result of multiplying the second peak by the same factor K; and so on successively until the last appreciable peak. If we consider that the first instant, when there is maximum intensity in the coil, is equivalent to the zeroth peak, or the ghost peak, this will always have the same value and depends only on the intensity passing through the coil before disconnecting S1, it being possible to know precisely what the second peak will be, or the value of K just by measuring the first peak.

The same would occur in a similar way with the negative peaks.

For greater precision, instead of the ratio between peaks (K), the average of them could be used.

This damping is due to the sum of the vectors of the following parameters with unequal factors:

Closing of the magnetic circuit by the material.
Magnetic conductance of the material.
Hysteresis of the material.
Eddy current losses in the material.
Shape of the material.
Surface of the material.
Mass of the material.
Volume of the material.

leading to the damping being less than in vacuo with some materials, such as ferrites for example.

The interaction of these two parameters, and comparing them with some preestablished values, gives us the value of the material that is being analysed. These values are compared with those generated by the processor, which gives the response of whether or not the element is within the permitted range.

As the circuit explained above would not be very operative, an example is given below for connection to a processor.

Figure 3 shows a circuit that includes a tank circuit consisting of a coil 111 and capacitor 112 in parallel, connected to a processor 5.

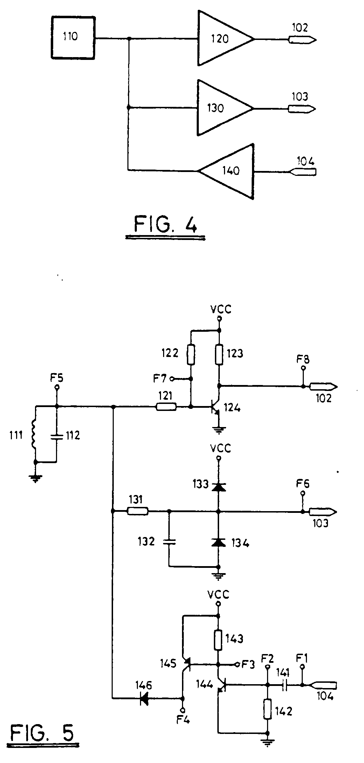

Referenced with number 110 in the circuit in figure 4 is the pick-up, consisting of the tank circuit. This arrangement also includes an amplifier or separator 120 for detecting the pulse length; an amplifier or separator 130 for the analog-digital converter, and the power generator 140 for providing energy for the pick-up.

The pick-up 110 is made up of a pick-up coil 111, figure 3, and a capacitor 112 in parallel. This forms a resonating LC unit like that found in many electrical sensors, but its functioning is totally different, as was seen previously, and the circuit can even function with just one coil without any need to fit another pick-up on the side opposite to where the material passes as occurs in the majority of selectors, though this does not prevent the possibility of two or more coils being included in place of one, whether they be in parallel, series, star, etc., without the boundaries of the present invention being exceeded.

Element 120 of figure 4 is a Schmitt trigger amplifier, and its task is to convert the signal from the coil into something that the logic circuitry connected to 102 can measure in order to obtain the period of the self-oscillation.

Element 130 is an attenuator. Element 140 is an amplifier.

Circuit 110 of figure 4 consists of the elements 111 and 112, figures 3 and 5, element 111 being the pick-up coil for magnetic damping and magnetic permeability, while element 112 is the resonance capacitor for the above element.

As can be better appreciated from figure 5, the circuit 120 is formed from the elements 121, 122, 123 and 124. Element 121 has the function of limiting the input signal and polarizing the element 124. The function of element 122 is solely to polarize 124. The element 123 is the load resistance of the element 124 for being able to calculate the polarization values of the elements 121 and 122.

Element 124 is the active element of circuit 120 and its purpose is to amplify the signal generated by circuit 110 and convert it into logic levels so that the length of the pulses generated or a set of them can then be measured.

Circuit 130 is made up of the elements 131, 132, 133 and 134: element 131 has the function of limiting the current of the pulses generated by circuit 110. Element 132 has the task of short-circuiting small parasitic noises. Element 133 has the task of putting a limit on the supply voltage to the generated pulses, in such a way that if a pulse has a higher voltage it is automatically short-circuited and restricted to the supply voltage. Element 134 has the task of putting a limit on the negative supply voltage to the generated pulses, in such a way that if a pulse has a lower voltage it is automatically short-circuited and restricted to the supply voltage.

Circuit 140 is made up of the elements 141, 142, 143, 144, 145 and 146: element 141 has the task of preventing a voltage generator pulse being greater than a specific value in the event of malfunctioning; if it were not for this, an excessively long pulse in 104 would burn out the elements 144 and 145. Element 142 is a polarization resistor so that element 144 is normally deactivated. Element 143 is a polarization resistor so that element 145 is normally deactivated. The function of element 144 is to amplify the input pulse into 104, in order for it to be injected into element 145. This element 145 has the task of amplifying the input signal in order to be able to inject a pulse with the sufficient energy into circuit 110. The function of element 146 consists of allowing the energy pulse amplified by the previous elements to pass to circuit 110, but it does not allow the rebound from the signal to pass to the circuit itself.

All the above elements are an example of this application, and any or all of them can be varied so long as the functioning of the invention does not vary and the boundaries or scope of it are not exceeded.

In one of the multiple laboratory tests, the following elements were used, giving examples of correct functioning:

111 - Elliptical coil of some 2 mH of 300 turns with a thickness of 0.2 mm.

112 - 68 nF polyester capacitor.

121 - 100K resistor.

122 - 390K resistor.

123 - 2.2K resistor.

124 - BC547 transistor.

131 - 33K resistor.

132 - 100pF ceramic capacitor.

133 and 134 - One BAV99, double diode in series.

141 - 100nF ceramic capacitor.

142 - 47 resistor.

143 - 1K resistor.

144 - BC547 transistor.

145 - BC557 transistor.

146 - 1N 4148 diode.

The V dc supply for this example of the invention was 5V and its earth 0V.

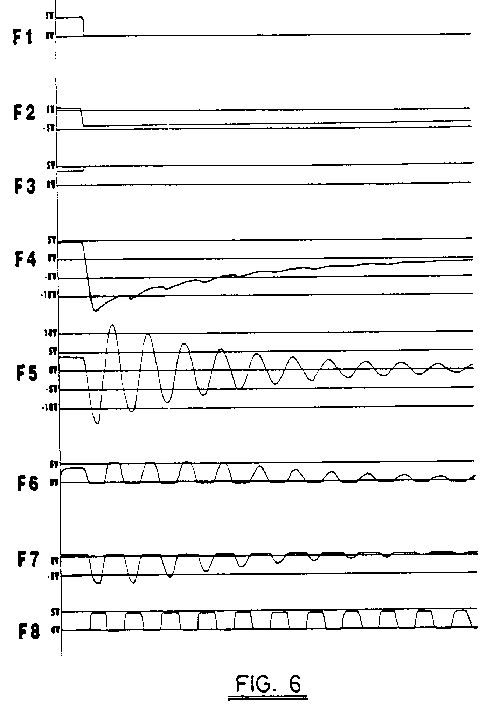

Figure 6 shows the times diagrams for the functioning of this example, where:

The shape of wave F1 corresponds to the pulse at the input to 104. This is simply a positive indicator pulse of the instant in which the circuit 140 has to give an energy pulse to the coil.

The shapes of waves F2, F3 and F4 refer to the amplification in intensity of circuit 140.

The wave of shape F5 is the response from the coil to the energy pulse.

The shape of wave F6 corresponds to the positive semi-rectification that can be read in point 103.

The shape of wave F7 corresponds to the intermediate pass of the amplifier 120 for generating the signal 102.

The shape of wave F8 is what can be read in point 102 of the circuitry after having been amplified by circuit 120.

All these shapes belong to the circuit of figure 5, and are indicated in the same circuit for a better understanding of the example of the invention.

For the functioning of the example described, in the first instant a positive pulse with a predetermined duration is injected in point 104. This pulse, with the wave shape F1, is amplified by the circuit 140, giving an energy pulse to the circuit 110. This circuit starts to self-oscillate, as shown in F5, with a damped oscillation tending towards zero. In that moment, the same wave shape is present in point 103 as in the circuit 110, but only the positive part and limited by the positive feed, as shown in F6. This signal is measured by an analog-digital converter at its high point in the crests lower than the supply voltage. The ratio between these crests and the separation between them give us the value of the element to be measured, as already stated above. Comparing them with some preestablished parameters, we can learn what material the element to be verified consists of.

Point 102 is a signal for being able to measure the period of the cycle of the response oscillation and thereby know in which moment to measure the crest. In this way, a ratio is obtained between the magnetic permeability of the element, its mass, its hysteresis, etc.

In the case of coins or tokens, the measurement is made at each of the instants in which the coin passes through the magnetic field of the pick-up. In this way, coins or tokens with two or more alloys can be differentiated from falsifications with a single alloy, since they leave a holographic memory of the wave shape within the circuitry at each moment the coin passes.

The damping is always given by a factor K. This is always less than 1 and gives us the ratio between the peaks of the signal generated by 110, in such a way that, except for leaks and other losses, the second peak will always be the first one multiplied by K, as previously explained.

The formula can also be represented by $e^{-(I \times n)}$, where (n) is the number of the crest and "I" another way of showing the constant.

With the arrangement described, and without any other kind of element, such as optocouplers for example, the size, mass and material of the compound can be distinguished.

## Claims

1. Procedure for the detection and analysis of elements of a metallic nature, wherein a damped oscillation magnetic field is created, characterised by measurement of its damping being made in order to obtain a value $K_o$ which corresponds to the measurement of the ratio between the peaks of the oscillations; the metallic piece to be analysed being then made to pass through the field, a second measurement being made of the damping of that field in order to obtain a value $K_1$ corresponding to the measurement of the ratio between the peaks of the oscillations altered by the effect of the passage of the metallic piece or element; finally calculating the ratio $K_0/K_1$ which will give a unique and indicative value of the material of the metallic element or piece, which will be compared with preestablished values generated by a processor.

2. Procedure according to patent claim 1, characterized by the fact that the value of the average of the periods of the damped oscillations is also discovered, before and during the passage of the metallic piece to be analysed, values $P_0$ and $P_1$ being obtained, whose ratio $P_0/P_1$ which will give a unique and indicative value of the material of the metallic element, which will be compared with preestablished values generated by a processor.

3. Procedure according to patent claims 1 and 2, characterized by the fact that the damped oscillation magnetic field is generated by a tank circuit.

4. Procedure according to patent claim 3; characterized by the fact that the signals from the tank circuit are made to pass through a first amplifier or separator in order to detect the length of the period of the oscillation, and through a second amplifier or separator through which the signal passes to an analog-digital converter.

5. Procedure according to patent claim 4, characterized by the fact that the analog-digital converter consists of a voltage/frequency converter.

6. Procedure according to patent claim 4, characterized by the fact that the analog-digital converter consists of a voltage/pulse converter.

## Patentansprüche

1. Verfahren zur Bestimmung und Analyse von Elementen metallischer Natur, wobei ein magnetisches Feld gedampfter Oszillation erzeugt wird, dadurch gekennzeichnet, daß mit dem Zweck einen Wert $K_0$ zu bekommen, eine Messung seiner Dampfung, die der Messung des Verhältnisses zwischen der Oszillationsspitzen entspricht, durchgeführt wird; wobei das zu analysierenden metallischem Werkstück durch das Feld durchlaufen gelassen und eine zweite Messung von der Dämpfung dieses Feld durchgeführt wird, mit dem Zweck einen Wert $K_1$ der Dämpfung von diesem Feld zu bekommen, der der Messung des Verhältnisses zwischen der durch die Auswirkung des Durchchlaufen vom metallischen Werkstück oder Element veränderten Oszillationsspitzen entspricht; wobei anschließend ein Rechnen des Verhältnisses $K_0/K_1$ durchgeführt, das einen einzigen und kennzeichnenden Wert vom Werkstoffen des metallischen Elementes, bzw, Werkstückes, ergeben wird, der mit vorbestimmten, durch einen Prozessor erzeugten Werte, vergliechen wird.

2. Verfahren nach Anspruch 1, dadurch gekennzeichnet, daß die Mittelwertgröße von der Dauer der gedämpften Oszillationen auch bevor und während des Durchlaufen vom zu analysierenden metallischen Werkstück bestimmt wird, wobei Werte $P_0$ und $P_1$ bekommen werden, deren verhältnisse $P_0/P_1$ einen einzigen und kennzeichnenden Wert vom Werkstoffen des metallischen Elementes, ergeben werden, der mit vorbestimmten, durch einen Prozessor erzeugten Werte, vergliechen wird.

3. Verfahren nach Ansrpuch 1 und 2, dadurch gekennzeichnet, daß das magnetische Feld gedämpfter Ossillation von einen Resonanzkreis erzeugt wird.

4. Vefahren nach Anspruch 3, dadurch gekennzeichnet, daß die Signalen aus dem Resonanzkreis bestimmt sind, um durch einen ersten Verstärker oder Trenner durchzulaufen, mit dem Zweck der Bestimmung von der Oszillationsdauer, und durch einen zweiten Verstärker oder Trenner, durch welchen das signal zur einen anolog-digital Umformer durchläuft.

5. Verfahren nach Anspruch 4, dadurch gekennzeichnet, daß der analog-digital Umformer ein Spannung/Frequenz Umformer ist.

6. Verfahren nach Anspruch 4, dadurch gekennzeichnet, daß der analog-digital Umformer ein Spannung/Pulse Umformer ist.

**Revendications**

1. Procédure pour la détection et l'analyse d'éléments de nature métallique, où l'on crée un champ magnétique à oscillation amortie, caractérisée par le fait que la mesure de son amortissement est faite pour obtenir une valeur $K_0$ correspondant à la mesure du rapport entre les sommets des oscillations, la pièce métallique à analyser est faite pour passer dans le champ, une seconde mesure de l'amortissement de ce champ étant faite pour obtenir une valeur $K_1$ correspondant à la mesure du rapport entre les sommets des oscillations modifiées par l'effet du passage de la pièce métallique ou de l'élément. Finalement le calcul du rapport $K_0/K_1$ donnera une seule valeur indicative du matériau de l'élément métallique ou de la pièce, qui sera comparée aux valeurs préétablies créées par un processeur.

2. Procédure selon la revendication 1, caractérisée par le fait que la valeur de la moyenne des périodes des oscillations amorties est également révélée, avant et pendant le passage de la pièce métallique à analyser ; l'on obtient alors les valeurs $P_0/P_1$, dont le rapport $P_0/P_1$ donnera une seule valeur indicative du matériau de l'élément métallique et sera comparé aux valeurs préétablies créées par un processeur.

3. Procédure selon les revendications 1 et 2 caractérisée par le fait que le champ magnétique à oscillation amortie est créé par un circuit à réservoir.

4. Procédure selon la revendication 3, caractérisée par le fait que les signaux provenant du circuit à réservoir sont conçus pour passer par un premier amplificateur ou séparateur, afin de détecter la longueur de la période d'oscillation et par un second amplificateur ou séparateur à travers duquel le signal passe à un convertisseur analogique-numérique.

5. Procédure selon la revendication 4, caractérisée par le fait que le convertisseur analogique-numérique consiste en un convertisseur de voltage/fréquence.

6. Procédure selon la revendication 4, caractérisée par le fait que le convertisseur analogique-numérique consiste en un convertisseur de voltage/impulsion.

FIG. 1

0ᵗ PEAK
1ᵗ PEAK
2ᵗ PEAK
3ᵗ PEAK
4ᵗ PEAK
5ᵗ PEAK
6ᵗ PEAK

+V
V1
0V
-V

P P P P P P

FIG. 2

111

112

A/D

5

FIG. 3

FIG. 4

FIG. 5

FIG. 6